# EUROPEAN PATENT APPLICATION

(11) **EP 4 610 750 A1**
(43) Date of publication of application: **03.09.2025**
(21) Application number: 23943629.8
(22) Date of filing: 28.06.2023
(51) Int. Cl.: G05B 19/05, G05B 23/02

(54) **TEST ASSISTANCE SYSTEM AND CONTROL METHOD THEREFOR**

(71) Applicant: Mitsubishi Electric Building Solutions Corporation, Tokyo 100-0006 (JP); MITSUBISHI ELECTRIC CORPORATION, Chiyoda-ku Tokyo 100-8310 (JP)
(72) Inventor: YAMAMOTO, Tatsuya, Tokyo 100-0006 (JP); KANNO, Kyohei, Tokyo 100-0006 (JP); TAKAHASHI, Hiroto, Tokyo 100-0006 (JP); OHTA, Yoshihiro, Tokyo 100-8310 (JP); OKAZATO, Atsushi, Tokyo 100-8310 (JP)
(74) Representative: Mewburn Ellis LLP
(86) International application number: PCT/JP2023/024036
(87) International publication number: WO 2025/004232

(57) **Abstract**

A processor (411) performs an update process of updating contents of a plurality of tests. A monitoring system performs an internal process in accordance with a given input value and outputs an output value as a result thereof. A check test includes a first check test and a second check test conducted after the first check test. In the update process, the processor (411) adds a test to the second check test based on a difference between a content of the first check test and a content of the second check test.

## Description

### TECHNICAL FIELD

The present disclosure relates to a test support system that supports a check test to check validity of input and output values that are input and output in a monitoring system, the monitoring system including a facility and a server that monitors the facility through a controller.

### BACKGROUND ART

Japanese Patent Laying-Open No. 2009-217664 (PTL 1) discloses an automatic test execution system that analyzes a source code to be tested, enters various values into a target program and tests the program. In the automatic test execution system, conditional expressions defined in methods are analyzed and boundary values are extracted, and all pieces of test data and return values of the test data are generated as a test execution result table.

The trace function of tracing a process flow is embedded in the source code to be tested, whereby trace information is derived, and the trace information is linked to the above-described test execution result table. In this way, duplication of test cases to be executed is deleted. Since the duplicate test cases are deleted, the test cases that do not contribute to a coverage rate can be excluded from the test target. The coverage rate is an indicator indicating a rate of a tested portion in the program.

### CITATION LIST

### PATENT LITERATURE

PTL 1: Japanese Patent Laying-Open No. 2009-217664

### SUMMARY OF INVENTION

### TECHNICAL PROBLEM

However, in the automatic test execution system described in PTL 1, deletion of the duplicate tests (test cases) may in some cases lead to exclusion of a test that does not contribute to improvement of the coverage rate but is required. Examples include a case in which tests to check input and output values that are continuously variable are conducted continuously. In such a case, by conducting these two tests, a change in output value can be checked. However, when the latter test is deleted, the above-described check cannot be performed.

In a monitoring system including a facility and a server that monitors the facility through a controller such as a programmable logic controller (PLC), a test form of conducting a unit test to check input and output data of the PLC as a check test and then conducting a system test (combination test) to test the entire monitoring system as a check test in a next step is assumed, for example.

In this case, when duplicate tests are deleted in the unit test in order to reduce the number of tests, a malfunction to be detected in the unit test may be detected in the system test in the next step, without being detected in the unit test. In such a case, it is necessary to conduct the tests again from the beginning of the unit test after correction of the software malfunction, which leads to a decrease in efficiency of conducting the tests.

In addition, when test items of the system test are not sufficiently extracted and a test to be conducted is not conducted, a malfunction occurs in a product that operates at a client's site, after the product is delivered to a client. This may occur because a person in charge of the unit test and a person in charge of the system test are different and the necessary information is not shared therebetween. For example, even though test items of the unit test are sufficiently extracted, contents of these test items are not sufficiently reflected in the system test, which may lead to missing test items to be conducted in the system test.

The present disclosure has been made to solve the above-described problem and an object thereof is to provide a test support system capable of preventing a malfunction to be detected in a check test from occurring at a client's site, and a control method therefor.

### SOLUTION TO PROBLEM

A test support system according to the present disclosure is a system that supports a check test to check validity of input and output values that are input and output in a monitoring system, the monitoring system including a facility and a server that monitors the facility through a controller. The test support system includes: a memory; and a processor. The memory stores contents of a plurality of tests conducted in the check test. The processor performs an update process of updating the contents of the plurality of tests. The monitoring system performs an internal process in accordance with a given input value and outputs an output value as a result thereof. The check test includes a first check test and a second check test conducted after the first check test. In the update process, the processor adds a test to the second check test based on a difference between a content of the first check test and a content of the second check test.

A control method according to the present disclosure is a control method for a test support system that supports a check test to check validity of input and output values that are input and output in a monitoring system, the monitoring system including a facility and a server that monitors the facility through a controller. The control method includes: storing contents of a plurality of tests conducted in the check test; and updating the contents of the plurality of tests. The monitoring system performs an internal process in accordance with a given input value and outputs an output value as a result thereof. The check test includes a first check test and a second check test conducted after the first check test. The updating further includes adding a test to the second check test based on a difference between a content of the first check test and a content of the second check test.

### ADVANTAGEOUS EFFECTS OF INVENTION

According to the present disclosure, since the test is added to the check test in the next step based on the difference between the content of the check test in the previous step and the content of the check test in the next step, it is possible to prevent a malfunction to be detected by the check test from occurring at a client's site.

### BRIEF DESCRIPTION OF DRAWINGS

Fig. 1 is a diagram showing an example of overall configurations of a monitoring system and a test support system in a first embodiment.
Fig. 2 is a diagram showing an example of hardware configurations of the monitoring system and the test support system.
Fig. 3 is a functional block diagram of the test support system.
Fig. 4 is a diagram showing control of a pump rotation speed.
Fig. 5 is a diagram showing an example of a test specification of a unit test.
Fig. 6 is a diagram showing an example of a test specification of a system test.
Fig. 7 is a flowchart of a process performed by the test support system.
Fig. 8 is a diagram showing control of a pump rotation speed in a second embodiment.
Fig. 9 is a diagram showing an example of a test specification of a unit test.
Fig. 10 is a diagram showing an example of a test specification of a system test.
Fig. 11 is a flowchart of a process performed by a test support system.

### DESCRIPTION OF EMBODIMENTS

Hereinafter, embodiments will be described with reference to the drawings. In the description below, the same components are denoted by the same reference characters and their names and functions are also the same. Therefore, detailed description thereof will not be repeated.

### First Embodiment.

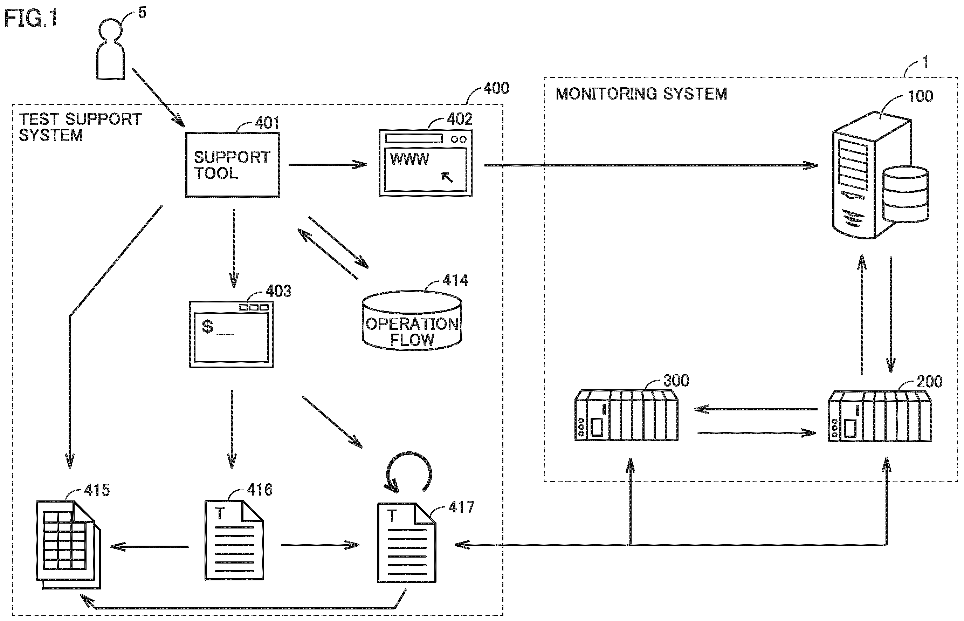

Fig. 1 is a diagram showing an example of overall configurations of a monitoring system 1 and a test support system 400 in a first embodiment.

Monitoring system 1 (also referred to as "air-conditioning instrumentation system") includes a server 100, a programmable logic controller (PLC) 200 serving as a controller, and a facility (PLC) 300.

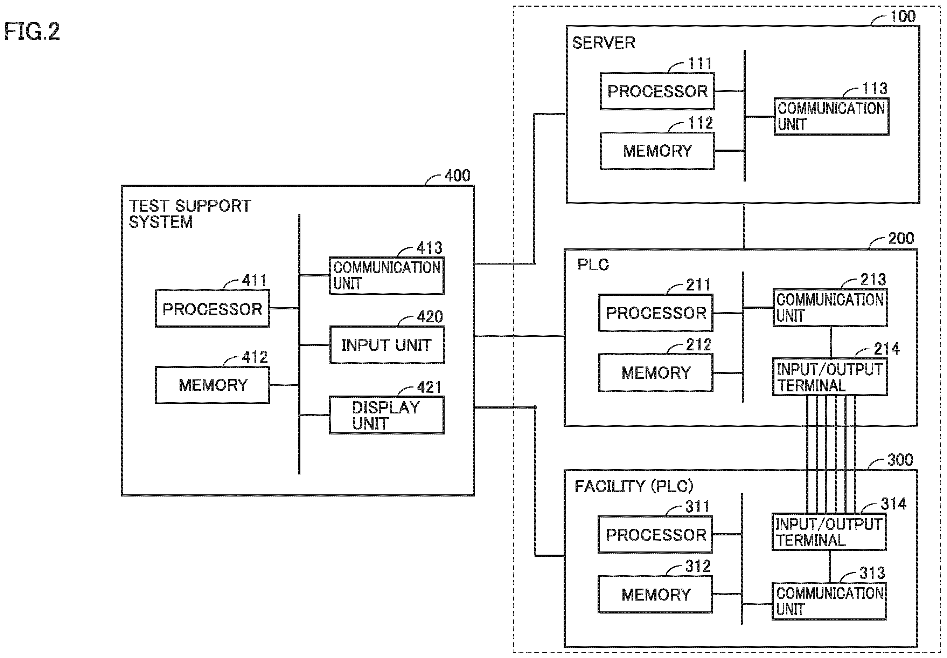

Monitoring system 1 is a system that manages various facilities placed in a building. Server 100 monitors or controls facility 300 through PLC 200. A signal output by facility 300 is obtained by server 100 through PLC 200 and can be displayed (monitored) on a display unit 421 (Fig. 2). In addition, a tester 5 of a check test (administrator of monitoring system 1) can transmit a control signal from server 100 to facility 300 through PLC 200 by performing an operation through an input unit 420 (Fig. 2).

Facility (PLC) 300 includes an air-conditioning facility placed in the building. Facility (PLC) 300 may include other facilities such as a lighting facility placed in the building. PLC 200 relays and receives and transmits input and output signals between facility (PLC) 300 and server 100, and controls facility (PLC) 300.

Test support system 400 is a system that supports a check test to check validity of input and output values (input and output signals) that are input and output in monitoring system 1.

The check test includes a "unit test" serving as a first check test, and a "system test" serving as a second check test conducted after the first check test. The unit test is a test to check input and output data that is input and output to and from a part of the devices included in monitoring system 1. Although "part of the devices" is PLC 200 in the first embodiment, "part of the devices" may be facility (PLC) 300.

The system test is a test (combination test) to comprehensively test the behavior of the whole of monitoring system 1. First, the unit test is conducted as a check test, and then, the system test is conducted as a check test in a next step.

Although the case in which PLC 300, which is a device placed as a device simulating the facility and inputs and outputs a signal instead of the facility, is connected to monitoring system 1 is described in the first embodiment, an actual facility may be connected to monitoring system 1 to conduct the check test.

The check test can be automatically conducted using test support system 400. Test support system 400 includes a support tool 401, a browser 402, a console 403, an operation flow 414, a test specification 415, an input/output test program 416, and an input/output test test code 417.

Server 100 can be accessed through browser 402. Browser 402 is displayed on a screen of display unit 421 (Fig. 2) and browser 402 displays values obtained by server 100 (e.g., various values obtained from the air-conditioning facility). In addition, by operating browser 402 through input unit 420 (Fig. 2), facility (PLC) 300 can be controlled through browser 402. For example, a set temperature of the air-conditioning facility can be set on browser 402.

Support tool 401 is a tool that automatically performs this operation of browser 402 and automatically conducts the check test. Support tool 401 controls browser 402 and console 403 and conducts the check test in accordance with a procedure described in preset operation flow 414.

A procedure of automatically operating browser 402 is created using support tool 401. The created procedure is stored in operation flow 414.

Input/output test program 416 generates input/output test test code 417. Support tool 401 starts input/output test program 416 from console 403. Contents of the tests conducted in the check test are described in test specification 415. Input/output test program 416 reads test specification 415 and generates input/output test test code 417 based on test specification 415.

A result of the check test is determined by execution of input/output test test code 417. Support tool 401 starts input/output test test code 417 from console 403 and executes input/output test test code 417. Console 403 is a console screen that can be started in test support system 400. By executing a command on console 403, various types of software executable on test support system 400 can be executed.

Test support system 400 is connected to PLC 200 and facility (PLC) 300 by a signal line such that test support system 400 can obtain input and output signals of PLC 200 and input and output signals of facility (PLC) 300. When input/output test test code 417 is executed, test support system 400 obtains the input and output signals of PLC 200 and the input and output signals of facility (PLC) 300, and determines the test result (determines validity of the input and output data) based on the test contents in test specification 415. Specifically, test support system 400 compares a value described in test specification 415 with an actually obtained value, and determines whether the value is valid. A result thereof is recorded in test specification 415.

With the above-described configuration, test support system 400 automatically conducts the check test. The above-described example is merely one example. The check test may be automatically conducted using any other methods, or tester 5 may directly operate browser 402 to conduct the check test, or tester 5 may visually check the result of the check test, or a part of the check test may be automatically conducted.

Support tool 401 is one of a so-called no-code tool that does not require programming. Test support system 400 may be built using some kind of generally distributed no-code tool, or the check test may be automatically conducted by programmatically implementing a process of controlling the operation of browser 402, without using such a tool.

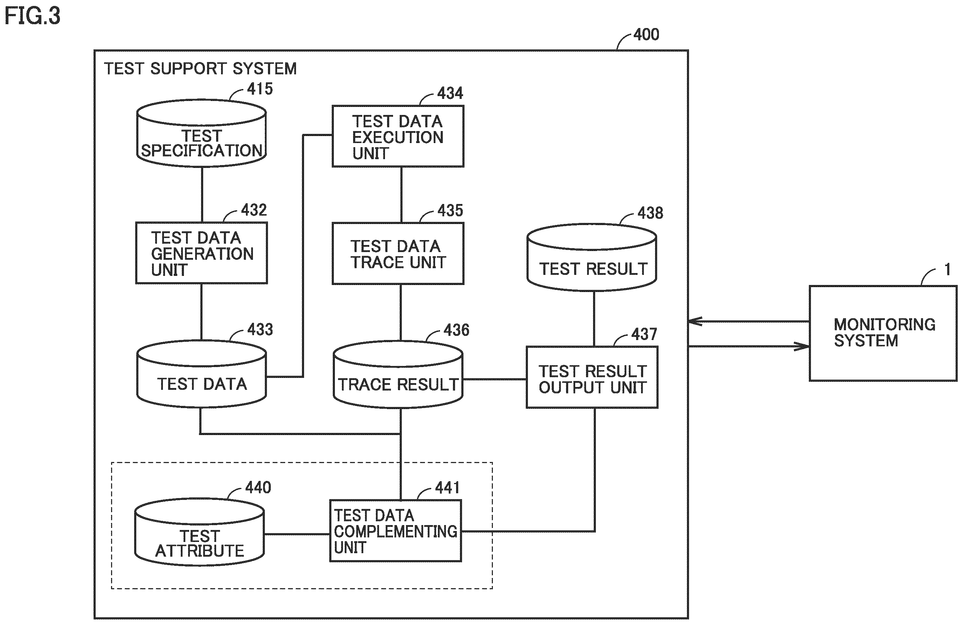

Furthermore, in the first embodiment, input/output test program 416 is configured to be capable of performing an update process of updating (deleting or adding) the test contents in test specification 415. The update process includes a process of updating a test content of the unit test and a process of updating a test content of the system test. Input/output test program 416 can delete or add the test contents in test specification 415 and update the test contents in test specification 415 based on the test contents in test specification 415 and a program executed by a device (e.g., PLC 200) to be tested by monitoring system 1 (specifically described below with reference to Fig. 3 and the subsequent figures).

Although the update process is implemented as a process performed by input/output test program 416 running on server 100 as described above, the update process is not limited thereto. The update process may be implemented in any form, as long as the update process is implemented as a process that can be performed on test support system 400. For example, the update process may be performed as a plug-in of application software running on server 100, or may be performed as an add-on that can run on a browser, or may be implemented to be performed on a server placed at a remote location different from server 100.

Fig. 2 is a diagram showing an example of hardware configurations of monitoring system 1 and test support system 400. As described above, monitoring system 1 includes server 100, PLC 200 and PLC 300. Server 100 and PLC 300 are connected via PLC 200 by a communication line (signal line), and are configured to be capable of communicating with each other.

Test support system 400 is also connected to PLC 300 and PLC 200 by a communication line (signal line), and is configured to be capable of obtaining the signals input and output to and from PLC 300 and PLC 200. Test support system 400 is configured to be communicably connectable to server 100 via browser 402.

Server 100, which is implemented as at least one or more servers, includes a processor 111, a memory 112 and a communication unit 113. Processor 111 is, for example, a central processing unit (CPU). Memory 112 is configured to include a read only memory (ROM), a random access memory (RAM) and a storage device, for example. The storage device is a nonvolatile storage device such as an HDD or an SSD.

Processor 111 comprehensively controls the whole of server 100. Processor 111 executes a program stored in memory 112. The ROM stores a program describing a process procedure of server 100. The RAM serves as a working area when the CPU executes the program, and temporarily stores the program, data when executing the program, and the like. Communication unit 113 is an interface for communicating with PLC 200 and test support system 400.

PLC 200, which is implemented as at least one or more PLCs, includes a processor 211, a memory 212, a communication unit 213, and an input/output terminal 214. Processor 211 is, for example, a CPU. Memory 212 is configured to include a ROM, a RAM and a storage device, for example. Processor 211 comprehensively controls the whole of PLC 200. Processor 211 executes a program stored in memory 212. Communication unit 213 is an interface for communicating with server 100, PLC 300 and test support system 400. Communication unit 213 receives and transmits input and output signals to and from PLC 300 through input/output terminal 214.

PLC 300, which is implemented as at least one or more PLCs, includes a processor 311, a memory 312, a communication unit 313, and an input/output terminal 314. Processor 311 is, for example, a CPU. Memory 312 is configured to include a ROM, a RAM and a storage device, for example. Processor 311 comprehensively controls the whole of PLC 300. Processor 311 executes a program stored in memory 312. Communication unit 313 is an interface for communicating with PLC 200 and test support system 400. Communication unit 313 receives and transmits input and output signals to and from PLC 200 through input/output terminal 314. Input/output terminal 214 of PLC 200 and input/output terminal 314 of PLC 300 are connected by a plurality of signal lines. The electric signals (input and output signals) are input and output between PLC 200 and PLC 300 through the plurality of signal lines connected between input/output terminal 214 and input/output terminal 314.

Test support system 400 includes a processor 411, a memory 412, a communication unit 413, input unit 420, and display unit 421. Processor 411 is, for example, a CPU. Memory 412 is configured to include a ROM, a RAM and a storage device, for example. Processor 411 comprehensively controls the whole of test support system 400. Processor 411 executes a program stored in memory 412. Communication unit 413 is an interface for communicating with server 100, PLC 200 and PLC 300.

Display unit 421 is a display that shows various information images. Input unit 420 receives an input from tester 5. Input unit 420 is, for example, a keyboard, a mouse, or a touch panel.

Support tool 401, browser 402, console 403, input/output test program 416, and a program of input/output test test code 417 shown in Fig. 1 are stored in memory 412 and executed by processor 411. Operation flow 414 and test specification 415 are also stored in memory 412. Test support system 400 may be a personal computer or the like including display unit 421 and input unit 420.

Fig. 3 is a functional block diagram of test support system 400. Test support system 400 includes test specification 415, a test data generation unit 432, test data 433, a test data execution unit 434, a test data trace unit 435, a trace result 436, a test result output unit 437, a test result 438, a test attribute 440, and a test data complementing unit 441.

The above-described function is the function performed by input/output test program 416 and is the function of updating the test contents in test specification 415 based on the test contents in test specification 415 and the program executed by the device (such as PLC 200) to be tested by monitoring system 1.

Test specification 415, test data 433, trace result 436, test result 438, and test attribute 440 are stored in memory 412 of test support system 400. Test data generation unit 432, test data execution unit 434, test data trace unit 435, test result output unit 437, and test data complementing unit 441 are executed by processor 411 of test support system 400.

Test data generation unit 432 reads test specification 415 of the unit test and generates test data 433. Test data 433 is data obtained by extracting input and output data that is input and output to and from monitoring system 1 based on test specification 415.

Test data execution unit 434 inputs test data 433 to monitoring system 1 and operates a program to be executed in monitoring system 1. Monitoring system 1 performs an internal process (process performed by the program) in accordance with a given input value, and outputs an output value as a result thereof.

Test data trace unit 435 obtains a source code of the program to be executed in monitoring system 1. Test data trace unit 435 specifies the process to be performed by the program to be executed in monitoring system 1 when inputting test data 433 to monitoring system 1 and operating the program, and stores the process as trace result 436.

For example, it is assumed that the data is input and output to and from PLC 200. In this case, it is assumed that when input data X is given to PLC 200, output data Y is output. Based on the set of input data X and output data Y, test data trace unit 435 analyzes the source code and specifies which internal process has been performed in the program running on PLC 200.

For example, when input data X is given in the program running on PLC 200, a process for a function A in which input data X is given as an argument is performed. When output data Y is output as a return value of function A, test data trace unit 435 specifies "function A" as the performed internal process. When a process A1 in function A is performed in the case of input data X1 and a process A2 in function A is performed in the case of input data X2, test data trace unit 435 may specify "process A1 in function A" and "process A2 in function A" as the internal processes, respectively.

The process of analyzing the source code by test data execution unit 434 and test data trace unit 435 as described above may be realized using the known technique described in, for example, Japanese Patent Laying-Open No. 2009-217664.

The process of specifying which internal process has been performed in the program running on PLC 200 is not limited to the above-described process based on analysis of the source code, and may be a process based on test specification 415. For example, when test specification 415 describes test items, a function of a program in the case where the test items are conducted, input data (argument) that is input to the function, and output data (return value) that is output from the function, the performed internal process may be specified based on these descriptions.

Test data complementing unit 441 determines a test attribute based on test data 433 and trace result 436, and stores the test attribute as test attribute 440. Test data complementing unit 441 performs an update process of updating (deleting or adding) contents of a plurality of tests. In the update process, test data complementing unit 441 sets, as a deletion target, duplicate test data of the unit test in terms of the internal process. Test data complementing unit 441 determines whether to exclude the tests set as the deletion target from the deletion target, based on test data 433 and the test attribute. In the update process, test data complementing unit 441 deletes the test data of the unit test that is finally set as the deletion target. Furthermore, in the update process, test data complementing unit 441 adds a test item lacking in the system test to the test specification of the system test based on a difference between the content of the unit test and the content of the system test.

Test result output unit 437 stores, as test result 438, the test result of the test data of the unit test updated in the update process, and reflects the test result of the unit test in test specification 415.

The update process performed by test data complementing unit 441 will be specifically described below.

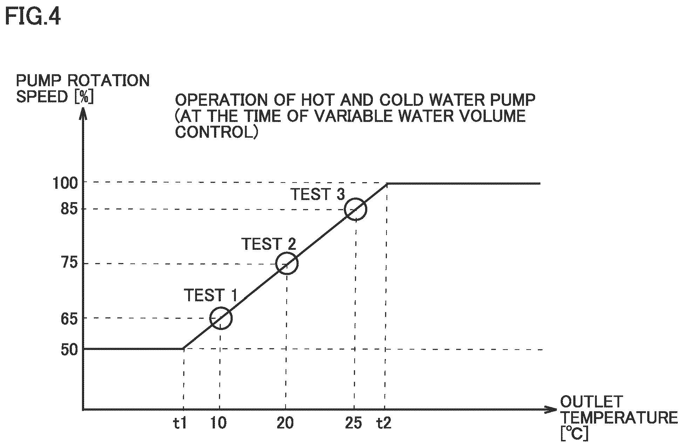

Fig. 4 is a diagram showing control of a pump rotation speed. For example, it is assumed that an air-conditioning facility is placed in a building and PLC 300 is placed as a device simulating the air-conditioning facility. This air-conditioning facility is a device that decreases or increases a temperature of the outdoor air taken in from the outside through heat exchange with the hot and cold water and supplies the outdoor air to the inside.

The temperature of the outdoor air taken in from the outside is measured as "outdoor air temperature". An indoor temperature set in monitoring system 1 is obtained as "indoor temperature". A temperature of the outdoor air supplied to the inside after heat exchange is measured as "outlet temperature". PLC 200 controls the pump rotation speed by instructing PLC 300 of the pump rotation speed, based on the outdoor air temperature, the indoor temperature and the outlet temperature.

Fig. 4 shows the pump rotation speed [%] (vertical axis) controlled with respect to the outlet temperature [°C] (horizontal axis) when the set temperature is "23°C" and the outdoor air temperature is "10°C". When the pump is rotating at the maximum rotation speed, the pump rotation speed is 100%. When the pump is rotating at K% of the maximum rotation speed, the pump rotation speed is K%. The minimum rotation speed of the pump is 50% of the maximum rotation speed.

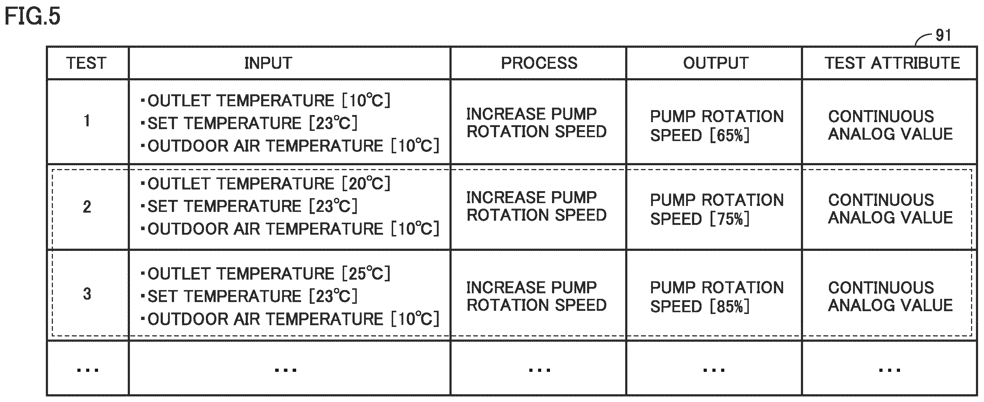

In the present example, when the outlet temperature is "t1", the pump rotation speed is controlled to "50% (minimum rotation speed)". Thereafter, the pump rotation speed is increased. The pump rotation speed is controlled to "65%" when the outlet temperature is "10°C" (Test 1 in Fig. 5). The pump rotation speed is controlled to "75%" when the outlet temperature is "20°C" (Test 2 in Fig. 5). The pump rotation speed is controlled to "85%" when the outlet temperature is "25°C" (Test 3 in Fig. 5). The pump rotation speed is controlled to "100%" when the outlet temperature is "t2°C".

Fig. 5 is a diagram showing an example of a test specification 91 (corresponding to test specification 415 in Fig. 3) of the unit test. Test specification 91 describes the test contents (such as Tests 1 to 3) of the unit test as the check test.

Test 1 is a test to check whether the pump rotation speed "65%" is output as the output value from PLC 200 when the outlet temperature "10°C", the set temperature "23°C" and the outdoor air temperature "10°C" are given as the input values to PLC 200. As shown in the section of "Test 1" in Fig. 4, the pump rotation speed is gradually increased, and "65%" is expected to be detected as the pump rotation speed when the outlet temperature reaches "10°C".

Test 2 is a test to check whether the pump rotation speed "75%" is output as the output value from PLC 200 when the outlet temperature "20°C", the set temperature "23°C" and the outdoor air temperature "10°C" are given as the input values to PLC 200. As shown in the section of "Test 2" in Fig. 4, the pump rotation speed is gradually increased, and "75%" is expected to be detected as the pump rotation speed when the outlet temperature reaches "20°C".

Test 3 is a test to check whether the pump rotation speed "85%" is output as the output value from PLC 200 when the outlet temperature "25°C", the set temperature "23°C" and the outdoor air temperature "10°C" are given as the input values to PLC 200. As shown in the section of "Test 3" in Fig. 4, the pump rotation speed is gradually increased, and "85%" is expected to be detected as the pump rotation speed when the outlet temperature reaches "25°C".

Since a "process of increasing the pump rotation speed" is performed as the internal process of PLC 200 in each of Tests 1 to 3, the internal processes in Tests 1 to 3 are identical. In such a case, as described with reference to Fig. 3, test data complementing unit 441 sets Tests 2 and 3 as a deletion target.

The outlet temperature, the set temperature, the outdoor air temperature, and the pump rotation speed, which are the input and output values, are continuously variable continuous values (also referred to as "continuous analog values"). In Tests 1 to 3, it is possible to check not only which pump rotation speed is output when the outlet temperature, the set temperature and the outdoor air temperature are given, but also whether the pump rotation speed has been increased in a state where the pump rotation speed is expected to increase. In such a case, test data complementing unit 441 sets the test attribute of each of Tests 1 to 3 as "continuous analog value" and excludes, from the deletion target, Tests 1 to 3 each having the test attribute determined as "continuous analog value".

In this way, Tests 1 to 3 are all excluded from the deletion target and conducted in the first embodiment, although Tests 2 and 3 are deleted from the unit test in the conventional technique. The first embodiment may be configured such that Tests 2 and 3 are deleted from the unit test and conducted in the system test.

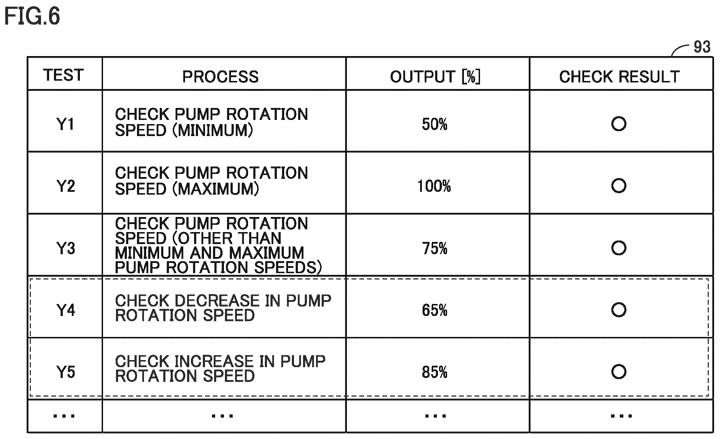

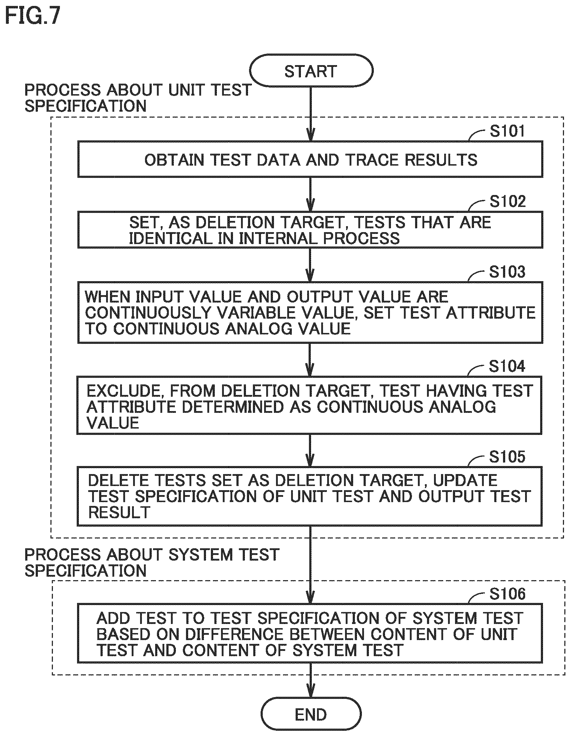

After the unit test is conducted, the system test is conducted. Fig. 6 is a diagram showing an example of a test specification 93 of the system test. Test specification 93 originally describes Tests Y1 to Y3. Tests Y4 and Y5 are tests added in accordance with a process shown by a flowchart in Fig. 7 described below.

Test Y1 is a test to check the minimum pump rotation speed. The minimum pump rotation speed is 50%. Test Y2 is a test to check the maximum pump rotation speed. The maximum pump rotation speed is 100%. Test Y3 is a test to check a pump rotation speed other than the maximum and minimum pump rotation speeds. Here, the pump rotation speed "75%" is checked.

The description below is given using a flowchart. Fig. 7 is a flowchart of a process performed by test support system 400. The present process is the update process and the like performed by test data complementing unit 441 and the like. Hereinafter, "step" will also be simply referred to as "S".

S101 to S105 correspond to a process about test specification 91 of the unit test. When the present process starts, in S101, processor 411 obtains a plurality of tests of the unit test and trace results corresponding thereto from test data 433 and trace result 436.

In S102, processor 411 sets, as the deletion target, tests that are identical in the internal process, of the plurality of tests, based on the trace results. In the example shown in Fig. 5, the plurality of tests include Test 1 as a first test and Tests 2 and 3 as a second test. Since Tests 2 and 3 and Test 1 are identical in the internal process, Tests 2 and 3 are set as the deletion target. When Test 1 and Test 2 are continuously conducted tests, Test 2 may be set as the deletion target, and when Test 2 and Test 3 are continuously conducted tests, Test 3 may be set as the deletion target.

In each of the plurality of tests, processor 411 determines the test attribute based on the type of the input value and the type of the output value. Specifically, in S103, when the input value and the output value are continuously variable values in each of the plurality of tests, processor 411 determines that the test attribute is a continuous value (continuous analog value).

The continuously variable value is a value that is different in properties from a value configured such that one of two values is set, such as 0 or 1, or ON or OFF. Even when the input value takes a value of ON or OFF and the output value is a continuously variable value, processor 411 may determine that the test attribute is a continuous value (continuous analog value).

Processor 411 excludes the second test (Tests 2 and 3) from the deletion target in accordance with the test attribute of the first test (Test 1) and the test attribute of the second test (Test 2). Specifically, in S104, processor 411 excludes, from the deletion target, the test having the test attribute determined as the continuous analog value, of the tests set as the deletion target. As a result, when processor 411 determines that each of the test attribute of the first test (Test 1) and the test attribute of the second test (Tests 2 and 3) is the continuous value, even when processor 411 determines that the first test (Test 1) and the second test (Tests 2 and 3) are identical in the internal process, processor 411 excludes the second test (Tests 2 and 3) from the deletion target.

In S105, processor 411 deletes the tests set as the deletion target, and updates test specification 91 (in Fig. 3, test specification 415) of the unit test and outputs test result 438.

S106 corresponds to a process about test specification 93 of the system test. In S106, processor 411 adds a test to the test specification of the system test based on a difference between the content of the unit test and the content of the system test. Addition of the test to the system test is realized by the below-described method, for example.

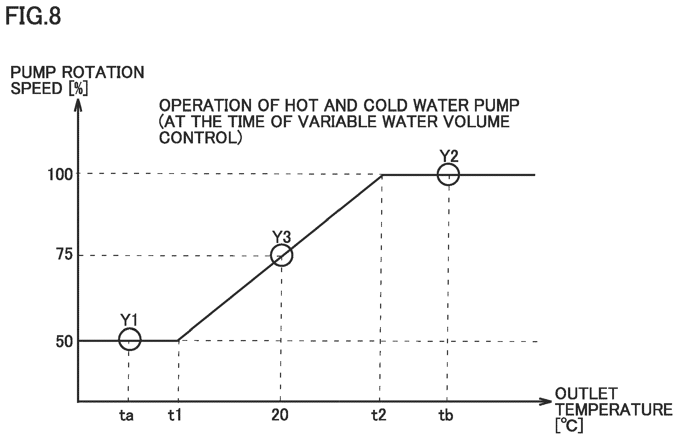

Test Y1 of the system test illustrated in Fig. 6 is a test to check the pump rotation speed "50%", Test Y2 is a test to check the pump rotation speed "100%", and Test Y3 is a test to check the pump rotation speed "75%". On the other hand, Test 1 of the unit test illustrated in Fig. 5 is a test to check the pump rotation speed "65%", Test 2 is a test to check the pump rotation speed "75%", and Test 3 is a test to check the pump rotation speed "85%". Among these tests, Test 2 and Test Y3 are identical in the pump rotation speed (75%). However, the output values of Tests 1 and 3 of the unit test do not match any of the output values of the tests of the system test. Therefore, for example, Test Y4 to check the output value (pump rotation speed "65%") of Test 1 and Test Y5 to check the output value (pump rotation speed "85%") of Test 3 are added to the system test. In this case, Test Y4 to change the output value to the output value (pump rotation speed "65%") of Test 1 (i.e., a test to check a decrease in pump rotation speed), and furthermore, Test Y5 to change the output value to the output value (pump rotation speed "85%") of Test 3 (i.e., a test to check an increase in pump rotation speed) may be added after Test Y3 to check the pump rotation speed "75%". A more detailed method about addition of the test to the system test will be described in a second embodiment with reference to Figs. 8 to 11.

As described above, test support system 400 is a system that supports a check test to check validity of input and output values that are input and output in monitoring system 1, monitoring system 1 including facility (PLC) 300 and server 100 that monitors the facility through PLC 200 serving as a controller. Test support system 400 includes: memory 412; and processor 411. Memory 412 stores contents of a plurality of tests conducted in the check test. Processor 411 performs an update process of updating the contents of the plurality of tests. Monitoring system 1 (PLC 200) performs an internal process in accordance with a given input value and outputs an output value as a result thereof. The check test includes a unit test serving as a first check test and a system test serving as a second check test conducted after the unit test. In the update process, processor 411 adds a test to the system test based on a difference between a content of the unit test and a content of the system test.

When test items of the system test are not sufficiently extracted and a test to be conducted is not conducted, a malfunction occurs in a product that operates at a client's site, after the product is delivered to a client. This may occur because a person in charge of the unit test and a person in charge of the system test are different and the necessary information is not shared therebetween. For example, even though test items of the unit test are sufficiently extracted, contents of these test items are not sufficiently reflected in the system test, which may lead to missing test items to be conducted in the system test. With the above-described configuration, the test can be added to the system test based on comparison with the content of the unit test, and thus, it is possible to prevent a malfunction to be detected in the system test from occurring at the client's site.

In the update process, processor 411 deletes a test that is set as a deletion target from the unit test. When an input value and an output value are continuously variable values in each of the plurality of tests, processor 411 determines that a test attribute is a continuous value (continuous analog value). The plurality of tests in the unit test include a first test (Test 1) and a second test (Tests 2 and 3). When processor 411 determines that the first test (Test 1) and the second test (Tests 2 and 3) are identical in the internal process, processor 411 sets the second test (Tests 2 and 3) as the deletion target. When processor 411 determines that each of the test attribute of the first test (Test 1) and the test attribute of the second test (Tests 2 and 3) is the continuous value (continuous analog value), even when processor 411 determines that the first test (Test 1) and the second test (Tests 2 and 3) are identical in the internal process, processor 411 excludes the second test (Tests 2 and 3) from the deletion target.

When duplicate tests (Tests 2 and 3 in the above-described example) are deleted in the unit test in order to reduce the number of tests, a malfunction to be detected in the unit test may be detected in the system test in the next step, without being detected in the unit test. In such a case, it is necessary to conduct the unit test and the system test again after correction of the software malfunction, which leads to a decrease in efficiency of conducting the tests due to the extra work. As described above, when the tests are identical in the internal process and when the input and output values are continuously variable values, the tests are excluded from the deletion target in the update process. Therefore, a test to check a state of change in output value (continuity of the output value) can be conducted in the unit test. As a result, it is possible to prevent a malfunction to be detected in the check test in the previous step (unit test) from being detected in the check test in the next step (system test). Furthermore, since a test item lacking in the system test can be added based on the unit test as described above, it is possible to not only prevent a malfunction to be detected in the unit test from being detected in the system test, but also prevent a malfunction to be detected in the system test from occurring at the client's site.

The update process in the unit test may be performed by test support system 400 as described above, or may be entirely or partially performed manually. For example, tester 5 may visually check test specification 91 and determine whether to exclude the test from the deletion target. The test that is set as the deletion target in the unit test may be conducted in the system test, without being conducted in the unit test. Alternatively, the test that is set as the deletion target may be conducted in both of the unit test and the system test. In addition, although addition or deletion of the test is targeted at the plurality of tests recorded in test specification 415 prepared in advance in the first embodiment, test support system 400 may generate all of the test items and record the test items in test specification 415.

### Second Embodiment.

Next, test support system 400 in the second embodiment will be described. In the first embodiment, in the update process, processor 411 adds the test to the system test based on the difference between the content of the unit test and the content of the system test. In addition, when the tests are identical in the internal process and when the input and output values are continuously variable values in the unit test, processor 411 excludes the tests from the deletion target in the update process.

In the second embodiment, a test is added to a system test using a method described below. In the second embodiment, only portions different from the first embodiment will be described and no description will be given of portions common to the first embodiment.

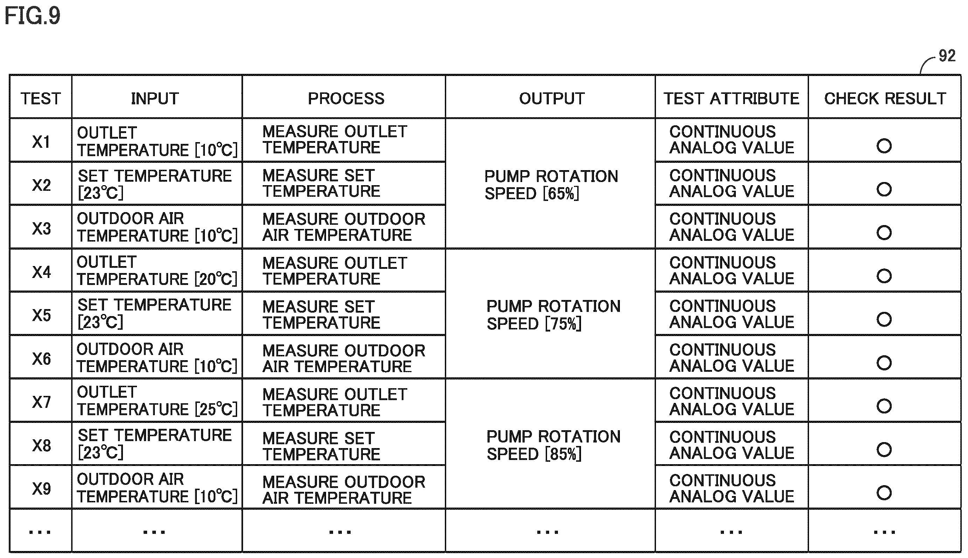

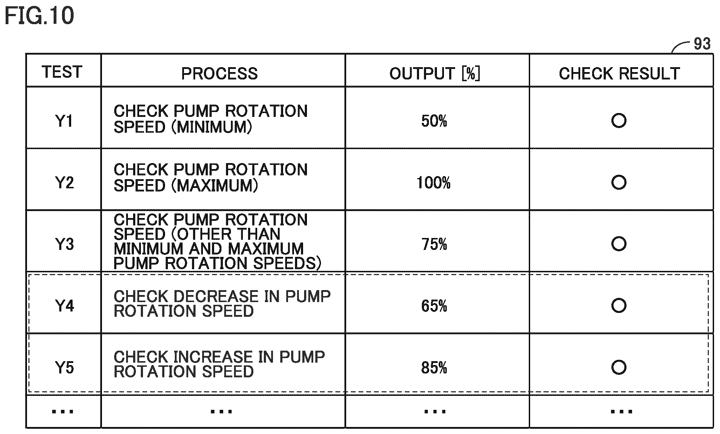

Fig. 8 is a diagram showing control of a pump rotation speed in the second embodiment. A content in Fig. 8 is the same as the content described with reference to Fig. 4. Fig. 9 is a diagram showing an example of a test specification 92 of a unit test. Fig. 10 is a diagram showing an example of test specification 93 of a system test. A content in Fig. 10 is the same as the content described with reference to Fig. 6.

A content of the unit test shown in Fig. 9 is substantially the same as the content of the unit test shown in Fig. 5. Test 1 in Fig. 5 corresponds to Tests X1 to X3 in Fig. 9, Test 2 in Fig. 5 corresponds to Tests X4 to X6 in Fig. 9, and Test 3 in Fig. 5 corresponds to Tests X7 to X9 in Fig. 9.

For example, Test X1 tests whether the pump rotation speed "65%" is output when the outlet temperature is "10°C". Test X2 tests whether the pump rotation speed "65%" is output when the set temperature is "23°C". Test X3 tests whether the pump rotation speed "65%" is output when the outdoor air temperature is "10°C". When the outlet temperature is "10°C" and the set temperature is "23°C", the outlet temperature and the pump rotation speed increase continuously over time as shown in Fig. 8. Therefore, similarly to Fig. 5, the pump rotation speed "75%" is measured with respect to the outlet temperature "20°C" and the pump rotation speed "85%" is measured with respect to the outlet temperature "25°C". As a result, Tests X4 to X9 can be conducted.

In test specification 92 of the unit test, the test attribute is set as the continuous analog value in each of Tests X1 to X9, and "circle marks" are put to indicate that the results obtained by conducting Tests X1 to X9 are valid.

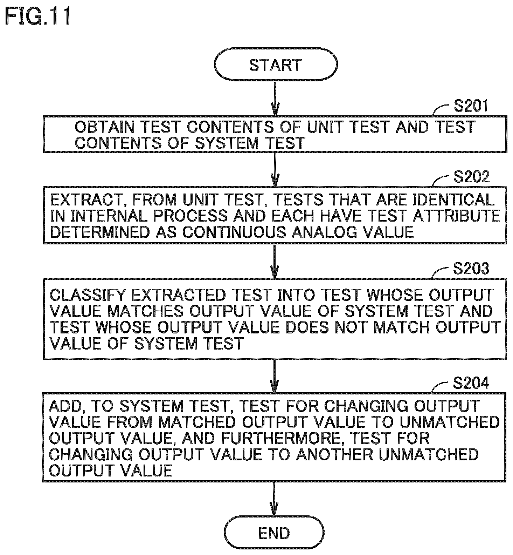

Test specification 93 of the system test conducted after the unit test is conducted is as shown in Fig. 10. Test specification 93 originally describes Tests Y1 to Y3. Tests Y4 and Y5 are tests added in accordance with a process shown by a flowchart in Fig. 11 described below.

Test Y1 is a test to check the minimum pump rotation speed. As also shown in Fig. 8, the minimum pump rotation speed is 50%. Test Y2 is a test to check the maximum pump rotation speed. As also shown in Fig. 8, the maximum pump rotation speed is 100%. Test Y3 is a test to check a pump rotation speed other than the maximum and minimum pump rotation speeds. As also shown in Fig. 8, the pump rotation speed 75% is checked here.

Fig. 11 is a flowchart of a process performed by test support system 400. In the present process, a process of adding a test to the system test based on a difference between the content of the unit test and the content of the system test is performed. The present process may, for example, be performed by input/output test program 416 after the end of the process by test result output unit 437.

When the present process starts, in S201, processor 411 obtains contents of a plurality of tests of the unit test recorded in test specification 92 of the unit test and contents of a plurality of tests of the system test recorded in test specification 93 of the system test.

In S202, processor 411 extracts tests that are identical in the internal process and each have the test attribute determined as the continuous value (continuous analog value), of the plurality of tests of the unit test. For example, in the example in Fig. 9, Tests X3, X6, X9 and the like that are identical in the internal process and each have the test attribute determined as the continuous analog value are extracted.

In S203, processor 411 classifies the extracted tests into a test whose output value matches the output value of the system test and a test whose output value does not match the output value of the system test. Test Y1 of the system test is a test to check the pump rotation speed "50%", Test Y2 is a test to check the pump rotation speed "100%", and Test Y3 is a test to check the pump rotation speed "75%". Test X3 of the unit test is a test to check the pump rotation speed "65%", Test X6 is a test to check the pump rotation speed "75%", and Test X9 is a test to check the pump rotation speed "85%". Among these tests, Test X6 and Test Y3 are identical in the pump rotation speed (75%). However, the output values of Tests X3 and X9 do not match any of the output values of the tests of the system test.

In S204, processor 411 adds, to the system test, a test to change the output value from the matched output value to the unmatched output value, and furthermore, a test to change the output value to another unmatched output value. In the above-described example, Test Y4 to change the output value to the output value (pump rotation speed "65%") of Test X3 (i.e., a test to check a decrease in pump rotation speed), and furthermore, Test Y5 to change the output value to the output value (pump rotation speed "85%") of Test X9 (i.e., a test to check an increase in pump rotation speed) are added after Test Y3 to check the pump rotation speed "75%" that matches the output of Test X6.

As described above, when processor 411 determines that the first test (Test X6) and the second test (Test X3) in the unit test are identical in the internal process, when processor 411 determines that each of the test attribute of the first test (Test X6) and the test attribute of the second test (Test X3) is the continuous analog value, and when the system test does not include a test to check an output value (pump rotation speed "65%") of the second test (Test X3), processor 411 adds an additional test Y4 to check the output value of the second test (Test X3) to the system test in the update process.

Particularly, when the system test includes a test to check an output value (pump rotation speed "75%") of the first test (Test X6), processor 411 may add the additional test Y4 to check a change from the output value (pump rotation speed "75%") of the first test (Test X6) to the output value (pump rotation speed "65%") of the second test (Test X3).

With the above-described configuration, the result of the unit test and the result of the system test can be compared, and the test content of the system test can be complemented based on the test content that has already been conducted in the unit test and has not yet been conducted in the system test. Therefore, it is possible to prevent a malfunction to be detected in the system test from occurring at the client's site.

The embodiments disclosed herein are also intended to be carried out as being combined as appropriate within the technically consistent scope. It should be understood that the embodiments disclosed herein are illustrative and non-restrictive in every respect. The technical scope indicated by the present disclosure is defined by the terms of the claims rather than the description of the embodiments above and is intended to include any modifications within the scope and meaning equivalent to the terms of the claims.

### REFERENCE SIGNS LIST

1 monitoring system; 5 tester; 91 to 93 test specification; 100 server; 111, 211, 311, 411 processor; 112, 212, 312, 412 memory; 113, 213, 313, 413 communication unit; 214, 314 input/output terminal; 420 input unit; 421 display unit; 200 PLC; 300 facility (PLC); 400 test support system; 401 support tool; 402 browser; 403 console; 414 operation flow; 415 test specification; 416 input/output test program; 417 input/output test test code; 432 test data generation unit; 433 test data; 434 test data execution unit; 435 test data trace unit; 436 trace result; 437 test result output unit; 438 test result; 440 test attribute; 441 test data complementing unit.

## Claims

1. A test support system that supports a check test to check validity of input and output values that are input and output in a monitoring system, the monitoring system including a facility and a server that monitors the facility through a controller, the test support system comprising:
a memory that stores contents of a plurality of tests conducted in the check test; and
a processor that performs an update process of updating the contents of the plurality of tests, wherein
the monitoring system performs an internal process in accordance with a given input value and outputs an output value as a result thereof,
the check test includes a first check test and a second check test conducted after the first check test, and
in the update process, the processor adds a test to the second check test based on a difference between a content of the first check test and a content of the second check test.

2. The test support system according to claim 1, wherein
in the update process, the processor deletes a test that is set as a deletion target from the first check test,
when an input value and an output value are continuously variable values in each of the plurality of tests, the processor determines that a test attribute is a continuous value,
the plurality of tests in the first check test include a first test and a second test,
when the processor determines that the first test and the second test are identical in the internal process, the processor sets the second test as the deletion target, and
when the processor determines that each of the test attribute of the first test and the test attribute of the second test is the continuous value, even when the processor determines that the first test and the second test are identical in the internal process, the processor excludes the second test from the deletion target.

3. The test support system according to claim 2, wherein
when the processor determines that the first test and the second test are identical in the internal process, when the processor determines that each of the test attribute of the first test and the test attribute of the second test is the continuous value, and when the second check test does not include a test to check an output value of the second test, the processor adds an additional test to check the output value of the second test to the second check test in the update process.

4. The test support system according to claim 3, wherein
when the second check test includes a test to check an output value of the first test, the additional test is a test to check a change from the output value of the first test to the output value of the second test.

5. A control method for a test support system that supports a check test to check validity of input and output values that are input and output in a monitoring system, the monitoring system including a facility and a server that monitors the facility through a controller, the control method comprising:
storing contents of a plurality of tests conducted in the check test; and
updating the contents of the plurality of tests, wherein
the monitoring system performs an internal process in accordance with a given input value and outputs an output value as a result thereof,
the check test includes a first check test and a second check test conducted after the first check test, and
the updating further includes adding a test to the second check test based on a difference between a content of the first check test and a content of the second check test.
